# EUROPÄISCHE PATENTSCHRIFT

(11) **EP 1 672 265 B1**
(45) Veröffentlichungstag und Bekanntmachung des Hinweises auf die Patenterteilung: **28.07.2010**
(21) Anmeldenummer: 05026338.3
(22) Anmeldetag: 02.12.2005
(51) Int. Cl.: F16L 27/093, F16L 27/04

(54) **Verbindungsanordnung für eine Fluidleitung, insbesondere Hahnstück**
Connection device for a fluid line, in particular for a tap
Dispositif de raccordement pour une conduite de fluide, notamment pour un robinet

(30) Priorität: 18.12.2004 DE 102004061040
(43) Veröffentlichungstag der Anmeldung: 21.06.2006
(73) Patentinhaber: GARDENA Manufacturing GmbH, 89079 Ulm (DE)
(72) Erfinder: Lameli, Peter, 72622 Nürtingen (DE); Schiedt, Christoph, 88483 Burgrieden (DE)

(56) Entgegenhaltungen:
- DE-A1- 3 802 632
- GB-A- 1 551 429
- US-A- 1 003 042
- US-A- 1 005 407
- US-A- 3 943 962

## Beschreibung

Die Erfindung betrifft eine Verbindungsanordnung für eine Fluidleitung, insbesondere ein Hahnstück zum Anschluss eines Schlauchs, beispielsweise eines Gartenschlauchs, an eine Wasserzuleitung.

Für den lösbaren Anschluss eines Schlauchs an einen Wasserhahn bekannt und vielfach eingesetzt sind Schraubanschlüsse, welche auf ein Gewinde am Wasserhahn aufgeschraubt werden. Die Schraubanschlüsse können einen Schlauch-Klemmstutzen zur dauerhaften Verbindung mit einem Schlauch aufweisen oder vorzugsweise als Teil einer Steckkupplung einen Kupplungsnippel aufweise. Im bevorzugten letztgenannten Fall ist dann vorteilhafterweise mit einem anzuschließenden Schlauch eine Kupplungshülse als Gegenstück zu dem Kupplungsnippel verbunden. Bei gängigen Steckkupplungen sind die verbundenen Kupplungsteile Nippel und Hülse um eine mit der Steckrichtung zusammenfallende Hauptrichtung drehbar.

Aus der DE 44 33 812 C2 ist eine Sonderform einer mit einem Schlauch verbindbaren Kupplungshülse bekannt, bei welcher die Eingangs-Hauptrichtung der Kupplungshülse und die Ausgangs-Hauptrichtung eines Schlauch-Klemmstutzens, welche die anfängliche Richtung des Schlauchs festlegt, um 45° gegeneinander geneigt sind.

Die DE 38 02 632 A1 beschreibt eine Verbindungsanordnung in einer Druckmedienleitung mit einem schwenkbaren und torsionsfähigen Kugelgelenk zur lageveränderlichen Verbindung zwischen einem Druckmittellieferer und einem Druckmittelverbraucher.

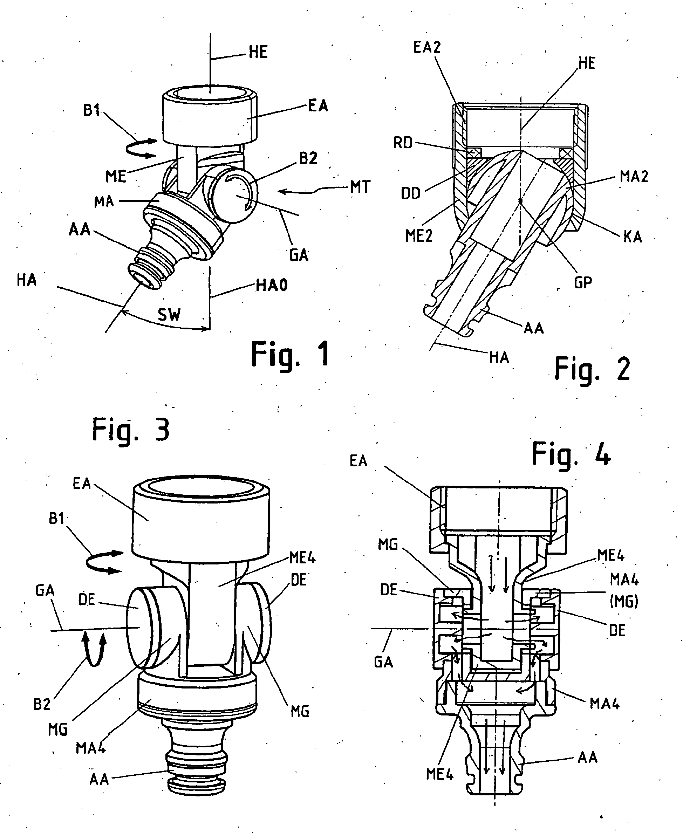

Fig. 2 zeigt eine Schnittdarstellung einer Verbindungsanordnung, bei welcher ein Gelenk in einem Mittelteil als Kugelgelenk ausgebildet ist. Dieses hat den besonderen Vorteil, dass es aus der Postition mit zu einer Eingangs-Hauptrichtung paralleler Ausrichtung einer Ausgangs-Hauptrichtung in alle Richtungen verschwenkbar ist. Hierdurch kann beispielsweise ein Eingangsabschnitt ME2 einstückig mit einem Schraubanschluss EA2 als Eingangsanschluss vierbunden und damit in am Wasserhahn befestigter Position unverdrehbar sein. Der Schwenkwinkel der Ausgangs-Hauptrichtung gegen eine Mittenposition ist bei einer Kugelgelenkanordnung allerdings eingeschränkt.

An dem einstückig mit dem Eingangsanschluss EA2 ausgeführten Mittelteil ist eine Innenfläche in Form einer Teilfläche einer Kugel als Gelenkpfanne augebildet, in welcher der einstückig mit dem Ausgangsanschluss AA ausgebildete Ausgangsabschnitt MA2 des Mittelteils mit einer Kugelteilfläche KA einliegt und nach allen Seiten um einen Gelenkpunkt GP verschwenkbar ist. Ein größerer Schwenkwinkel könnte beispielsweise durch aufeinander folgend zwei derartige Kugelgelenke erreicht werden.

Eine Ringdichtung DD weist der Außenfläche des Kugelabschnitts KA des Ausgangsabschnitts MA2 zuweisend und an dieser anliegend eine gewölbte Gleitfläche auf. Eine Flachdichtung RD ist auf der dem Eingangsanschluss EA2 zuweisenden Seite der Ringdichtung DD angeordnet. Beim Aufschrauben des Eingangsanschlusses EA2 auf beispielsweise einen Wasserhahn drückt letzterer mit einer Stirnfläche auf die Flachdichtung RD und bewirkt auf diese Weise auch eine Anpresskraft der Ringdichtung DD an die Oberfläche des Kugelabschnittes KA. Die Ringdichtung DD kann aber auch unabhängig von der Ringdichtung RD und dem Eingangsanschluss bzw. einer darauf befestigten Zuleitung in dem Mittelteil ME2 festgelegt und vorzugsweise gegen die Oberfläche des Kugelabschnitts KA elastisch vorgespannt sein.

Die US 3,943,962 A zeigt eine Leitungsverbindung mit einem Eingangs- und einem Ausgangsteil, welche um eine um 45° gegen Eingangsrichtüng und Ausgangsrichtung relativ zueinander verdrehbar sind. In der Figur skizziert ist mit durchgezogener'Linie eine erste Extremposition mit einem Winkel von 0° und mit unterbrochener Linie eine zweite Extremposition mit Ausrichtungswinkel 90° zwischen Eingangs-Hauptrichtung HE und Ausgangs-Hauptrichtung HA.

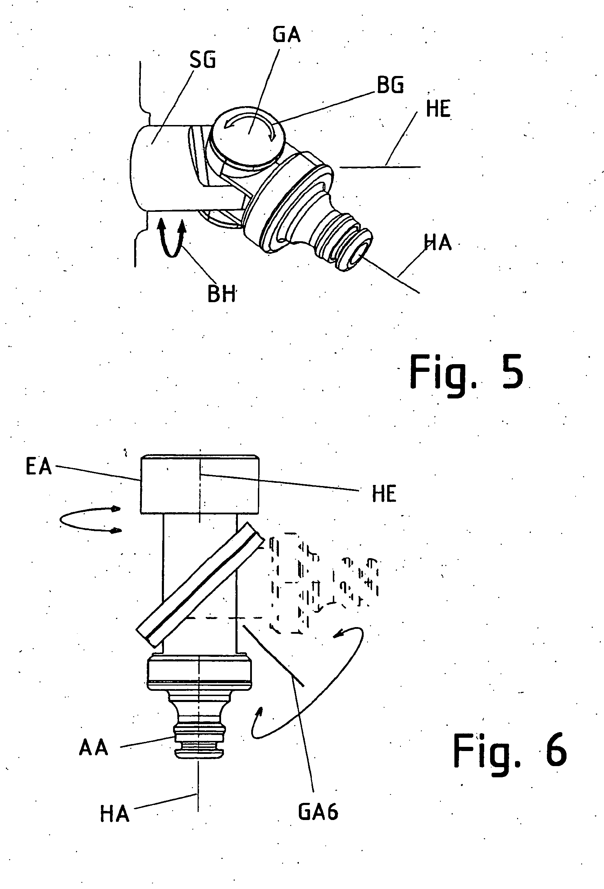

In Fig. 6 ist eine Ausführungsform skizziert; bei welcher bei einer Verschwenkung des Ausgangs relativ zum Eingang die Schwenkachse schräg gegen eine Haupt-Eingangsrichtung HE und eine Ausgangs-Hauptrichtung HA geneigt ist. Im skizzierten Beispiel beträgt die Neigung der Gelenkachse GA6 45° gegen die Ausgangs-Hauptrichtung und die Eingangs-Hauptrichtung. Die AusgangsHauptrichtung kann dadurch bezüglich der Eingangs-Hauptrichtung auf beliebige Winkel zwischen 0° und 90° eingestellt werden. In der Figur skizziert ist mit durchgezogener Linie eine erste Extremposition mit einem Winkel von 0° und mit unterbrochener Linie eine zweite Extremposition mit Ausrichtungswinkel 90° zwischen Eingangs-Hauptrichtung HE und Ausgangs-Hauptrichtung HA.

Die US 1,005,407 zeigt eine Leitungsverbindungsanordnung, bei welcher ein Eingangsanschluss und ein Ausgangsanschluss jeweils einander zu weisend einen Gelenkkopf aufweisen. Die beiden Gelenkköpfe sind Teile eines Gelenks, welches zusätzlich ein ringförmiges Mittelteil enthält. Das Mittelteil weist zwei um 90° gegeneinander verdrehte und in entgegengesetzte Richtungen weisende Gabeln auf, welche jeweils einen der Gelenkköpfe umgreifen. Die Gelenkköpfe sind über eingeschraubte Buchsen in den Armen der jeweiligen Gelenkgabel gelagert. Das Mittelteil definiert zwei quer zueinander und zu Eingangs- und Ausgangs-Hauptrichtung verlaufende Schwenkachsen, um welche die Gelenkköpfe verschwenkbar sind.

Bei einer aus der US 1,003,042 bekannten Leitungsverbindung sind zwei Gabelgelenkverbindungen in Strömungsrichtung hintereinander angeordnet.

Die bekannten Leitungsverbindungen mit über Gelenkgabeln relativ zueinander veränderlich ausrichtbaren Eingangs- und Ausgangsrichtungen sind durch die Vielzahl der darin enthaltenen Einzelteile und Verbindungen aufwendig und teuer in der Herstellung und daher wenig für den Einsatz in der Gartenbewässerung geeignet.

Der Erfindung liegt die Aufgabe zugrunde, eine vorteilhafte, insbesondere kostengünstig herstellbare Verbindungsanordnung für eine Fluidleitung mit relativ zueinander veränderlich ausrichtbarer Ausgangs- und Eingangs-Hauptrichtung, insbesondere zum Anschluss eines Gartenschtauchs an einen Wasserhahn anzugeben.

Die Erfindung ist im Patentanspruch 1 beschrieben. Die abhängigen Ansprüche enthalten vorteilhafte Ausgestaltungen und Weiterbildungen der Erfindung.

Die Erfindung ermöglicht vorteilhafterweise eine veränderbare relative Ausrichtung von Eingangs-Hauptrichtung und Ausgangs-Hauptrichtung einer Verbindungsanordnung für eine Fluidleitung, was insbesondere von besonderem Vorteil ist, wenn Eingang und/oder Ausgang über eine Fluidleitung zu einem ortsveränderlichen Objekt, beispielsweise einem hand gehaltenen Wasserabgabegerät, führen, dessen Ortsveränderung auch zu einer Verlagerung der Fluidleitung bei der Verbindungsanordnung führen kann. Die erfindungsgemäße Verbindungsanordnung kann einer solchen Verlagerung leicht folgen, so dass die mechanische Belastung der Verbindungsanordnung und/oder der verlagerbaren Fluidleitung besonders gering ist.

Eingang und/oder Ausgang der Verbindungsanordnung können fester Bestandteil größerer Objekte sein, welche ortsfest, wie z. B. als Wasserleitungsanschluss an einem Gebäude, Eingang oder Ausgang einer fest verlegten Bewässerungsanlage usw. sein können oder welche, wie z. B. Schlauchwagen oder Schlauchboxen für den Betrieb eines angeschlossenen Geräts zum Ausbringen eines Fluids quasi als ortsfest betrachtet werden können. Besonders vorteilhaft ist eine bevorzugte Ausführungsform, bei welcher die Verbindungsanordnung am Eingang einen Eingangsanschluss und am Ausgang einen Ausgangsanschluss jeweils zum Anschluss an eine zuführende bzw. wegführende Fluidleitung vorhanden ist. Zuführende und wegführende Fluidleitung bzw. Eingang und Ausgang der Verbindungsanordnung sind im Regelfall funktional vertauschbar.

Die Erfindung ist insbesondere von Vorteil für die Handhabung von Gartenschläuchen. Bei solcher Anwendung wird vom Benutzer typischerweise beim Anschließen des Schlauchs an die Zuleitung, insbesondere einen Wasserhahn, darauf geachtet, dass der Schlauch von der Anschlussstelle-weg knickfrei und verdrehungsfrei verläuft. Bei nachfolgender Benutzung wird aber die Lage des Schlauchs verändert, insbesondere auch durch Ziehen am Schlauch. Durch die erfindungsgemäße Anordnung bleibt dabei vorteilhafterweise der knickfreie und/oder verdrehungsfreie Verlauf des Schlauchs nach der Verbindung mit der ortsfesten Zuleitung erhalten. Der Schlauch kann in beliebige Richtung gezo-gen werden. Der Ausgangsanschluss folgt dabei durch die unveränderbare Ausrichtung der Zugrichtung, so dass auf dem Schlauch im wesentlichen nur noch Zugkräfte wirken und insbesondere ein Abknicken zuverlässig vermieden wird.

Insbesondere von Vorteil ist die Veränderbarkeit der Winkelausrichtung zwischen der durch die z. B. ortsfeste Zuleitung typischerweise festgelegten Eingangs-Hauptrichtung und der den anfänglichen Verlauf des verbindungsnahen Anfangsabschnitts des Schlauchs bestimmenden Ausgangs-Hauptrichtung. Als Hauptrichtung von Eingang bzw. Ausgang der Verbindungsanordnung sei die jeweilige Hauptströmungsrichtung an Eingang bzw. Ausgang verstanden, welche bei vorzugsweise im wesentlichen drehsymmetrischer Ausführung von Eingangsanschluss bzw. Ausgangsanschluss mit der jeweiligen Drehsymmetrieachse zusammenfällt. Für die veränderbare relative Winkelausrichtung der beiden Hauptrichtungen ist vorteilhafterweise in einem Mittelteil zwischen Ausgangsanschluss und Eingangsanschluss ein Gelenk vorgesehen, in welchem eine Verschwenkung des Eingangsanschlusses gegen den Ausgangsanschluss erfolgt.

Die Schwenkachse des Gelenks verläuft vorteilhafterweise quer sowohl zur Eingangs-Hauptrichtung als auch zur Ausgangs-Hauptrichtung, welche mit der Richtung der Schwenkachse vorteilhafterweise Winkel von wenigstens 30°, insbesondere wenigstens 45°, vorzugsweise ca. 90° bilden.

Vorzugsweise ist zusätzlich eine Verdrehbarkeit einer angeschlossenen Fluidleitung um die Eingangs-Hauptrichtung und/oder die Ausgangs-Hauptrichtung relativ zu der Verbindungsanordnung vorgesehen. Die Drehachsen dieser zusätzlichen Verdrehbarkeit fallen vorzugsweise mit den jeweiligen Hauptrichtungen zusammen.

Die beiden im Gelenk relativ zueinander bewegbaren Teile der Verbindungsanordnung können in bevorzugter Ausführung in einem Zweischritt-Spritzgussverfahren aus Kunststoff hergestellt sein, wobei in einem ersten Schritt ein erstes der beiden Teile gespritzt wird und in einem zweiten Schritt das erste Teil mit einer oder mehreren Teilflächen seiner Oberfläche eine Begrenzung der Form für den Spritzvorgang des zweiten Teils bildet.

Ein zwischen Eingangsanschluss und Ausgangsanschluss verlaufender Strömungskanal ist vorzugsweise ausschließlich durch formstabile, insbesondere nicht flexible Elemente begrenzt.

Der Eingangsanschlüss und /oder der Ausgangsanschluss kann vorteilhafterweise als Schraubanschluss, als Bajonettanschluss, als Schiebesitz, als ein Teil einer Steckkupplung oder als Schlauchanschlussstutzen ausgeführt sein.

Die Erfindung ist nachfolgend anhand von bevorzugten Ausführungsbeispielen unter Bezugnahme auf die Abbildungen noch eingehend veranschaulicht. Dabei zeigt:
- Fig. 1: eine erste vorteilhafte Ausführung der Erfindung,
- Fig. 2: eine Ausführung zum Stand der Technik,
- Fig. 3: eine bevorzugte Ausführungsform in Schrägansicht,
- Fig.4: die Ausführungsform nach Fig. 3 als Schnittbild,
- Fig. 5: eine Verbindungsanordnung als Teil einer größeren Einrichtung,
- Fig. 6: eine weitere Ausführungsform zum Stand der Technik mit schräg ausgerichteter Gelenkachse,
- Fig. 7: Anwendungsskizzen.

In Fig. 1 ist eine erste vorteilhafte Ausführung eines Verbindungselements als Hahnstück zwischen einem Wasserhahn als Flüssigkeitsquelle und einem Schlauch skizziert. Wasserhahn und Schlauch sind der Übersichtlichkeit halber nicht mit eingezeichnet. Die Flüssigkeitsquelle kann auch anderer Art sein, insbesondere ein am Gehäuse eines Schlauchwagens angeordneter Anschluss oder ein fest als Teil eines Bewässerungssystems, beispielsweise in Form einer sogenannten Wassersteckdose in einem Schacht angeordneter Anschluss.

Das Verbindungselement besteht im wesentlichen aus einem Eingangsanschluss EA, einem Mittelteil MT und einem Ausgangsanschluss AA, wobei das Mittelteil MT wiederum einen eingangsseitigen Abschnitt ME und einen ausgangsseitigen Abschnitt MA enthält. Im skizzierten Beispiel ist der Ausgangsabschnitt MA des Mittelteils mit dem Ausgangsanschluss AA fest verbunden ausgebildet. Der Ausgangsanschluss AA ist als Kupplungsnippel einer Steckkupplung ausgeführt. Der Eingangsanschluss EA ist als eine Überwurfmutter mit innen liegendem Schraubgewinde ausgeführt.

Zwischen Eingangsanschluss EA und Ausgangsanschluss AA ist im Innern des Verbindungselements abgedichtet ein Strömungskanal ausgebildet.

Am Eingangsanschluss sei eine Eingangs-Hauptrichtung HE definiert, welche mit einer Drehachse zusammenfällt, um welche der Eingangsabschnitt ME des Mittelteils relativ zum Eingangsanschluss EA verdrehbar ist. Der Eingangsanschluss EA wird fest auf ein Außengewinde eines Wasserhahns aufgeschraubt, womit die Ausrichtung der Eingangs-Hauptrichtung AE festgelegt ist. Auch im am Wasserhahn befestigten Zustand des Eingangsanschlusses EA ist der Eingangsabschnitt ME des Mittelteils MT um diese Eingangs-Hauptrichtung HE relativ zu dem Eingangsanschluss EA und dem Wasserhahn drehbar. Diese Drehbarkeit ist durch den Bewegungspfeil B1 angedeutet.

Eingangsabschnitt ME und Ausgangsabschnitt MA des Mittelteils MT sind um eine quer zur Eingangs-Hauptrichtung HE, vorzugsweise senkrecht zu dieser verlaufende Gelenkachse GA gegeneinander verschwenkbar. Ein entsprechendes Gelenk im Mittelteil kann hierfür in der Weise ausgebildet sein, dass Eingangsabschnitt ME und Ausgangsabschnitt MA in Richtung der Gelenkachse einander zuweisend Öffnungen als Teil des Strömungskanals aufweisen, durch welche Wasser vom Eingangsanschluss EA zum Ausgangsanschluss AA strömt. Ausführungsformen für ein durchströmtes Schwenkgelenk sind an sich bekannt. Eine besonders vorteilhafte Ausführung sieht vor, dass das Gelenk in einem Zwei-Schritt-Kunststoffspritzen hergestellt wird, wobei in einem ersten Schritt einer der beiden Mittelteilabschnitte, beispielsweise der Ausgangsabschnitt MA in einer Form gespritzt wird, und in einem zweiten Schritt der ändere Abschnitt, also beispielsweise der Eingangsabschnitt ME an den in der Spritzgußform befindlichen Abschnitt MA angespritzt wird, wobei der zuerst gespritzte Abschnitt mit Teilflächen seiner Oberfläche beim Spritzen des zweiten Abschnitts einen Teil der Begrenzung der Form für den zweiten Abschnitt bildet. Vorzugsweise werden im ersten und im zweiten Schritt des Spritzgußvorgangs unterschiedliche Kunststoffe eingesetzt. Mit dieser Zweischritt-Vorgehensweise kann insbesondere auch ohne weiteren Montageaufwand ein Ineinandergreifen der beiden Abschnitte des Mittelteils in Richtung der Gelenkachse GA mit Vorsprüngen, Überlappungen und Hinterschneidungen erreicht werden. Durch die Verwendung eines Teils des zuerst gespritzten Abschnitts als Teil der Formwandung für den danach gespritzten Abschnitt ergibt sich ferner an den Berührungsflächen eine enge Anlage, welche zu einer selbsttätigen Abdichtung des Gelenks führen kann.

In anderer Ausführung können die beiden relativ zueinander um die Gelenkachse verschwenkbaren Abschnitte durch eine mechanische Verbindung auf' die Gelenkachse, insbesondere auch eine achsial zwischen den beiden Abschnitten durchgehende Verbindung durch Schrauben, Rasten, Kleben etc. verbunden sein.

In zum Eingangsanschluss entsprechender Weise kann für den Ausgangsanschluss AA eine Ausgangs-Hauptrichtung HA definiert werden; welche der Strömungsrichtung durch den Ausgangsanschluss entspricht und zugleich mit einer Ausgangs-Drehachse zusammen fällt, um welche ein an den Ausgangsanschluss angeschlossener Schlauch relativ zu dem Ausgangsanschluss verdrehbar ist. im skizzierten Beispiel mit dem Steckkupplungsnippel als Ausgangsanschluss ergibt sich die Drehbarkeit eines angeschlossenen Schlauches um den Ausgangsanschluss AA durch die Konstruktion der Steckkupplung mit dem skizzierten Nippel und einer gleichfalls bekannten und gebräuchlichen Kupplungshülse als Teil eines Schlauchanschlussstückes mit einem Klemmstutzen zur Befestigung des Schlauchs. Kupplungshülse und Nippel solcher weit verbreiteten Steckkupplungen sind typischerweise um die Steckrichtung, welche in der Fig. 1 gleich der Ausgangs-Hauptrichtung HA ist, frei drehbar.

Durch die Verschwenkbarkeit von Eingangsabschnitt ME und Ausgangsabschnitt MA des Mittelteils um die Gelenkachse GA kann die Ausgangs-Hauptrichtung HA gegenüber einer Mittenposition, in welcher die Ausgangs-Hauptrichtung eine Ausrichtung HA0 parallel zu der Eingangshauptrichtung HE einnimmt, um einen Schwenkwinkel, welcher in Fig. 1 mit SW bezeichnet ist, verschwenkt werden. Vorzugsweise ist die Verschwenkbarkeit aus der MittenPosition HA0 in zwei entgegen gesetzte Richtungen gegeben. Der maximale Schwenkwinkel SW beträgt vorteilhafterweise wenigstens 30°, insbesondere wenigstens 45°, vorzugsweise wenigstens 60°. Die Schwenkbewegung von Ausgangsabschnitt MA mit Ausgangsanschluss AA relativ zu Eingangsabschnitt ME des Mittelteils und Eingangsanschluss EA ist durch den Bewegungspfeil B2 angedeutet.

Die in Fig. 1 skizzierte Anordnung mit dem um die Gelenkachse GA verschwenkbaren Mittelteil kann auf verschiedene Weise variiert werden. Beispielsweise kann anstelle des Schraubanschlusses durch eine Überwurfmutter auch bereits der Wasserhahn mit einem Teil, insbesondere einem Nippel einer Steckkupplung ausgebildet sein und der Eingangsanschluss des Verbindungsteils dann als Kupplungsgegenstück, insbesondere also als Kupplungshülse ausgeführt sein. Wenn dabei, wie gebräuchlich, Kupplungsnippel, und Kupplungshülse relativ zueinander verdrehbar sind, kann der Eingangsabschnitt ME des Mittelteils mit der Kupplungshülse als Eingangsanschluss drehfest verbunden sein.

Der Ausgangsanschluss kann anstelle eines Kupplungsnippels AA auch unmittelbar als Klemmstutzen für einen Schlauch ausgeführt sein. Vorteilhafterweise kann dabei eine Verdrehbarkeit des Schlauchs um die Ausgangs-Hauptrichtung HA dadurch gegeben sein, dass der Ausgangsanschluss nicht einstückig mit dem Ausgangsabschnitt MA des Mittelteils ausgeführt ist, sondern retativ zu diesem um die Ausgangs-Hauptrichtung HA drehbar gelagert ist.

Die verschiedenen Varianten von Eingangsanschluss und Ausgangsanschluss können auf unterschiedliche Arten im Kombination auftreten. Die Kupplungsteile Nippel und Hülse von Steckkupplung können wechselseitig vertauscht auftreten.

Eine bevorzugte Ausführung einer Verbindungsanordnung ist in Fig. 3 in Schrägansicht und in Fig. 4 als Schnittbild gezeigt. In den Figuren sind soweit funktional gleich und in der Ausführung vergleichbar gleiche Elemente mit gleichen Bezugszeichen wie in Fig. 1 bezeichnet. Insbesondere ist als Eingangsanschluss EA wiederum eine Überwurfmutter mit Innengewinde vorgesehen, welche relativ zu dem Mittelteil MT4, insbesondere dessen Eingangsabschnitt ME4 um die Eingangs-Hauptrichtung HE drehbar ist, um die Anordnung an einer Zuleitung mit Schraubgewinde zu befestigen. Der Ausgangsanschluss AA ist wiederum als Anschlussnippel einer Steckkupplung ausgeführt, wobei im skizzierten Beispiel nur der Kunststoffkörper der Verbindungsanordnung dargestellt und am Ausgängsanschluss noch in üblicher Weise ein O-Ring aufzusetzen ist.

In dem Mittelteil MT4 ist der Ausgangsabschnitt MA4 als Gabel mit zwei seitlichen Armen MG ausgebildet, welche den Gelenkteil des Eingangsabschnitts ME4 seitlich umgreifen. Der Strömungskanal zwischen Eingang und Ausgang enthält im Gelenk starke achsiale Strömungsanteile, mittels welcher das am Eingang zugeführte Wasser aus dem Eingangsabschnitt ME4 in im wesentlicher achsialer Richtung in die beiden Gabelarme des Ausgangsabschnitts MA4 übertritt und von dort zum Ausgangsanschluss AA hin wieder zu einem gemeinsamen Ausgangsstrom zusammengefasst wird.

Der Ausgangsabschnitt MA4 ist im skizzierten Beispiel vorteilhafterweise mit dem als Nippel einer Steckkupplung ausgeführten Ausgangsanschluss AA nachträglich verbunden, insbesondere verklebt. Aus Fig. 4 ist die Zusammenfügung dieser beiden Teile ersichtlich. Eine solche anfängliche Unterteilung und getrennte Herstellung von Ausgangsabschnitt MA4 und Ausgangsanschluss AA ist sowohl vorteilhaft für die Spritzguss-Herstellung des Ausgangsabschnitts MA4 als auch günstig hinsichtlich der Verwendung einheitlicher Teile, wobei ausgenutzt werden kann, dass identische Aüsgangsabschnitte AA auch für andere Verbindungsanordnungen gebräuchlicher Art eingesetzt werden können.

Der Ausgangsabschnitt MA4 ist in bevorzugter Ausführung mit dem Eingangsabschnitt ME4 in einem Zweischritt-Spritzguss-Verfahren hergestellt, wobei Teile der Oberfläche des Eingängsabschnitts ME4 den Formhohlraum für die Herstellung des Ausgangsabschnitts MA4 im zweiten Spritzgussschritt bilden. Dies sind insbesondere achsial einander zuweisende Flächen von Eingangsabschnitt ME4 des Mittelteils und den Gabelarmen des Ausgangsabschnitts MA4. Eingangsabschnitt ME4 und Gabelarme MG des Ausgangsabschnitts MA4 überlappen in achsialer Richtung im Gelenkbereich. Im Bereich dieser Überlappung können nach dem Spritzen der beiden Teile Dichtringe eingelegt werden.

Für die Spritzguss-Herstellung ist es vorteilhaft, wenn die Gabelarme MG des Ausgangsäbschnitts axial nach außen weisend offen bleiben. Diese Öffnungen werden nachträglich mit Deckeln DE verschlossen, welche fest auf den Gabelarmen befestigt werden, beispielsweise durch Verkleben oder Verschweißen.

In Fig. 5 ist eine Ausführung skizziert, bei welcher eine Anordnung mit Gelenk und Ausgangsabschnitt der in Fig. 1 skizzierten Art als Teil einer größeren insbesondere ortsfesten oder quasi ortsfesten Einrichtung ausgeführt ist. Der Eingangsabschnitt des gelenkbildenden Mittelteils ist als Stutzen SG ausgeführt, welcher in einer als feststehend betrachteten Wand FG, welche beispielsweise auch eine Gehäusewand eines Schlauchwagens sein kann, um die Eingangshauptrichtung drehbar gelagert ist, wie durch Pfeilbogen BH angedeutet. Bei senkrecht auf der Eingangs-Hauptrichtung HE stehender Gelenkachse GA verläuft die Gelenkachse GA in einer bezüglich der Wand FG feststehenden Ebene senkrecht zur Eingangs-Hauptrichtung HE. Durch die Verschwenkbarkeit des Ausgangsabschnitts mit dem Ausgangsanschluss AA um die Gelenkachse, angedeutet durch Bogenpfeil BG, kann die Ausgangs-Hauptrichtung HA in beliebige Richtungen im gesamten Halbraum auf der der Wand FG abgewandten Seite des Gelenks ausgerichtet werden.

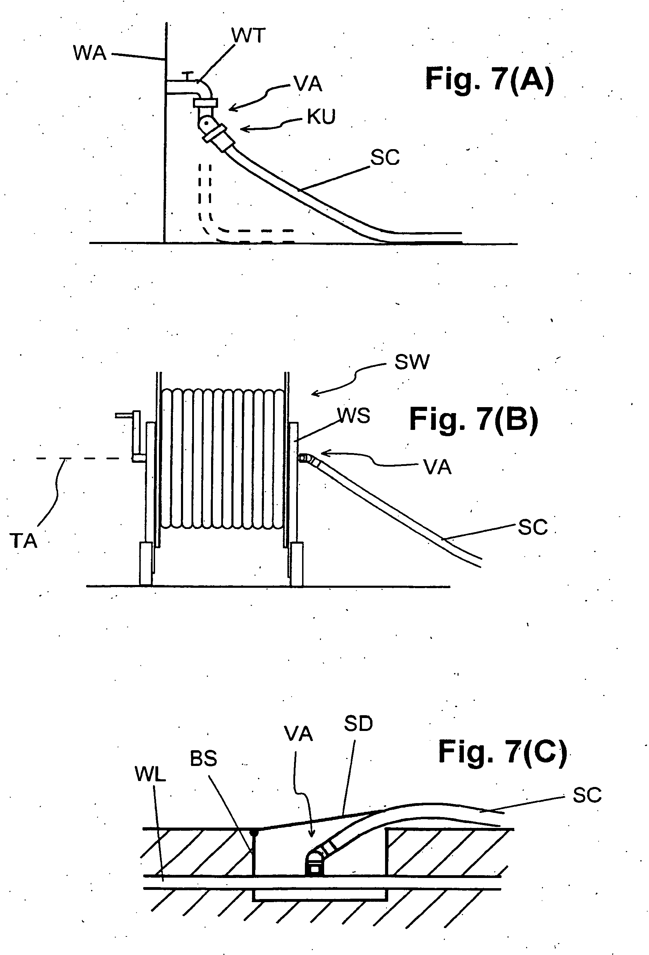

Die Fig. 7 (A) zeigt eine Anwendungssituation mit einem an einer Wand WA befestigten Wasserhahn WT, an welchem der Eingangsabschnitt EA eine Verbindungsanordnung VA nach Art der Fig. 1 verschraubt ist. Ein Schlauch SC ist über eine Kupplungshülse KU mit dem Ausgangsanschluss des Verbindungselements verbunden. Beim Anschluss eines Schlauchs über die Steckkupplung aus Kupplungshülse KU und Ausgangsanschluss AA kann der Schlauch beispielsweise in der mit unterbrochener Linie eingezeichneten Lage mit im wesentlichen vertikal nach unten weisenden Anfangsabschnitt verlaufen. Beim Gebrauch des Schlauchs wird typischerweise am Schlauch gezogen, so dass dieser sich in die mit unterbrochener Linie gezeichnete Position mit schräg verlaufendem Anfangsabschnitt verlagert. Die erfindungsgemäße Verbindungsanordnung kann einer solchen Verlagerung des Schlauchs im Betrieb problemlos folgen und der Schlauch bleibt dadurch weiter lediglich auf Zugkräfte beansprucht und wird nicht geknickt. Um die Hebelbelastung auf Eingangsanschluss und Eingangsabschnitt ME des Verbindungselements gering zu halten, liegt vorteilhafterweise die Gelenkachse GA nahe bei dem Eingangsanschluss EA., vorzugsweise nicht mehr als das 5-fache, insbesondere nicht mehr als das 3-fache der Querabmessung des Eingangsanschlusses von diesem entfernt

In der Skizze nach Fig. 7(B) ist an einem Schlauchwagen SW an der Seitenwange WS des Wagengestells eine Verbindungsanordnung VA nach Art der Fig. 5 als Teil des Schlauchwagens vorgesehen, an welche über eine Schnellkupplung ein Schlauch SC angeschlossen ist. Gegenüber einer herkömmlichen Ausführung eines Schlauchwagens mit einem Anschlussnippel einer Steckkupplung in Richtung der Trommelachse TA der Schlauchtrommel ST kann der angeschlossene Schlauch SC hierdurch ohne Gefahr des Abknickens mit geringer mechanischer Belastung sowohl des Schlauchs als auch der Verbindung zum Schlauchwagen vorteilhaft angeschlossen und im Gebrauch auch verlagert werden. Der Schlauch SC kann zuführende oder wegführende Fluidleitung sein.

In Fig. 7C ist eine Anordnung mit einem Bodenschächt BS skizziert, welcher Teil eines Bewässerungssystems mit einer unterirdisch verlegten Zuleitung WL sein kann. In dem Schacht ist ein häufig als sogenannte Wassersteckdose bezeichneter Anschluss vorgesehen, an welchen ein Schlauch SC zur Wasserentnahme anschließbar ist. Während bei typischen derartigen Anordnungen die vertikale Anschlussrichtung der Wassersteckdose auch die Ausrichtung des anfänglichen Schlauchabschnittes bestimmt, ist im in Fig. 7 skizzierten Beispiel mit einer erfindungsgemäßen Verbindungsanordnung VA eine vorteilhafte flache Ausrichtung des anfänglichen Schlauchabschnitts möglich. Die gelenkige Verbindungsanordnung kann sowohl Teil der in dem Schacht angeordneten Wassersteckdose als auch ein mit dem Schlauch fest verbundenes Anschlussteil als auch ein separates Verbindungsstück zwischen Wässersteckdose und Schlauchanschluss sein. Der Schacht ist durch einen Deckel SD verschließbar.

## Patentansprüche

1. Fluidleitungs-Verbindungsanordnung mit
- einem Eingangsanschluss (EA) mit einer Eingangs-Hauptrichtung (HE), zum lösbare Anschluss einer zuführenden Fluidleitung,
- einem Ausgangsanschluss (AA) mit einer Ausgangs-Hauptrichtung (HA), zum lösbaren Anschluss einer wegführenden Fluidleitung,
- einem Strömungskanal zwischen Eingangsanschluss (EA) und Ausgangsanschtuss (AA).
- einem Gelenk zwischen Eingangsanschluss (EA) und Ausgangsanschluss (AA), über
welches Eingangsanschluss (EA) und Ausgangsanschluss (AA) retativ zueinander in verschiedene Positionen mit unterschiedlichen Winkeln zwischen Eingangs-Hauptrichtung (HE) und Ausgangs-Hauptrichtung (HA) um wenigstens eine quer zu Eingans-Hauptrichtung (HE) und Ausgangs-Hauptrichtung (HA) verlaufende Gelenk-achse (GA) verschwenkbar sind,
wobei das Gelenk
- ein erstes Gelenkteil (ME) welches mit dem Eingangsanschluss (EA) verbunden und mitgeschwenkt ist
- ein zweites Gelenkteil (MA) welches mit dem Ausgangsanschluss (AA) verbunden und mitgeschwenkt ist
- eine gabelförmige Gelenkverbindung
enthält,
**dadurch gekenntzeichnet, dass** genau eine Gelenkachse (GA) zwischen erstem (ME) und zweitem Gelenkteil (MA) vorhanden ist, dass ein Eingangsabschnitt (ME, ME4) und ein Ausgangsabschnitt (MA, MA4) des Mittelteils (MT) als erstes und zweites Gelenkteil in einem Zweischritt-Spritzgussverfahren hergestellt sind, dass einer der Abschnitte (MA, MA4) gabelförmig ausgebildet ist und den anderen Absctinitt (ME, ME4) in Richtung der einzigen Gelenkachse (GA) umgreift, und dass Eingangsabschnitt (ME, ME4) und Ausgangsabschnitt (MA, MA4) des Mittelteils (MT) in Richtung der Gelenkachse (GA) ineinander greifen.

2. Fluidleitungs-Verbindungsanordung nach der Anspruch 1, **dadurch gekennzeichnet, dass** das Gelenk aus einer Mittelposition mit parallelem Verlauf der beiden Hauptrichtungen (HE, HA) in entgegen gesetzte Richtungen verschwenkbar ist.

3. Fluidleitungs-Verbindungsanordung nach Anspruch 1 oder 2, **dadurch gekennzeichnet, dass** der maximale Schwenkwinkel (SW) zwischen den beiden Hauptrichtungen (HE, HA) wenigstens 30°, vorzugsweise wenigstens 45° beträgt.

4. Fluidleitungs-Verbindungsanordung nach einem der Ansprüche 1 bis 3, **dadurch gekennzeichnet, dass** der Eingangsanschluss (EA) zur drehfesten Verbindung mit einer Fluidleitung ausgeführt ist.

5. Fluidleitungs-Verbindungsanordung nach einem der Ansprüche 1 bis 4, **dadurch gekennzeichnet, dass** der Eingangsanschluss (EA) ein Gewindeanschluss, ein Schiebesitz, ein Bajonettanschluss, ein Schlauchstutzen oder ein Kupplungsteil einer vorzugsweise drehbaren Steckkupplung ist.

6. Fluidleitungs-Verbindungsanordung nach einem der Ansprüche 1 bis 4, **dadurch gekennzeichnet, dass** der Ausgangsanschluss (AA) ein Gewindeanschluss, ein Schiebesitz, ein Bajonettanschluss, ein Schlauchstutzen oder ein Kupplungsteil einer vorzugsweise drehbaren Steckkupplung ist.

7. Fluidleitungs-Verbindungsanordung nach einem der Ansprüche 1 bis 6, **dadurch gekennzeichnet, dass** Eingängsabschnitt (ME, ME4) und Ausgangsabschnitt (MA, MA4) in einem Zweischritt-Spritzgussverfahren aus Kunststoff herstellbar sind, in welchem der in einem ersten Schritt der zuerst gespritzte Abschnitt (ME, ME4) mit einer oder mehreren Teiifiächen seiner Oberfläche eine Begrenzung der Form für den Spritzvorgang des zweiten Abschnitts (MA, MA4) bildet.

8. Fluidleitungs-Verbindungsanordung nach Anspruch 7, **dadurch gekennzeichnet, dass** Eingangsabschnitt (ME, ME4) und Ausgangsabschnitt (MA, MA4) des Mittelteils aus unterschiedlichen Kunststoffen bestehen.

## Claims

1. Fluid-line connecting arrangement, with
- an inlet connection (EA) with an inlet principal direction (HE), for the releasable connection of an incoming fluid line,
- an outlet connection (AA) with an outlet principal direction (HA), for the releasable connection of an outgoing fluid line,
- a flow duct between the inlet connection (EA) and the outlet connection (AA),
- a joint between the inlet connection (EA) and the outlet connection (AA), via which joint the inlet connection (EA) and the outlet connection (AA) can be pivoted in relation to one another, into various positions with different angles between the inlet principal direction (HE) and the outlet principal direction (HA), about at least one axis of articulation (GA) running transversely with respect to the inlet principal direction (HE) and the outlet principal direction (HA),
the joint containing
- a first joint part (ME) which is connected to and co-pivoted with the inlet connection (EA),
- a second joint part (MA) which is connected to and co-pivoted with the outlet connection (AA),
- a fork-shaped articulated connection,
**characterized in that** exactly one axis of articulation (GA) is present between the first (ME) and second (MA) joint part, **in that** an inlet portion (ME, ME4) and an outlet portion (MA, MA4) of the middle part (MT) are produced as the first and the second joint part in a two-step injection-moulding method, **in that** one of the portions (MA, MA4) is of fork-shaped design and surrounds the other portion (ME, ME4) in the direction of the single axis of articulation (GA), and **in that** the inlet portion (ME, ME4) and the outlet portion (MA, MA4) of the middle part (MT) engage one in the other in the direction of the axis of articulation (GA).

2. Fluid-line connecting arrangement according to Claim 1, **characterized in that** the joint can be pivoted out of a middle position, with the two principal directions (HE, HA) running parallel, into opposite directions.

3. Fluid-line connecting arrangement according to Claim 1 or 2, **characterized in that** the maximum pivot angle (SW) between the two principal directions (HE, HA) amounts to at least 30°, preferably to at least 45°.

4. Fluid-line connecting arrangement according to one of Claims 1 to 3, **characterized in that** the inlet connection (EA) is designed for rotationally fixed connection to a fluid line.

5. Fluid-line connecting arrangement according to one of Claims 1 to 4, **characterized in that** the inlet connection (EA) is a threaded connection, a sliding fit, a bayonet fastening, a hose connection piece or a coupling part of a preferably rotatable plug-in coupling.

6. Fluid-line connecting arrangement according to one of Claims 1 to 4, **characterized in that** the outlet connection (AA) is a threaded connection, a sliding fit, a bayonet fastening, a hose connection piece or a coupling part of a preferably rotatable plug-in coupling.

7. Fluid-line connecting arrangement according to one of Claims 1 to 6, **characterized in that** the inlet portion (ME, ME4) and outlet portion (MA, MA4) can be produced from plastic in a two-step injection-moulding method in which the portion (ME, ME4) injected first in a first step forms with one or more part-faces of its surface a boundary of the mould for the operation of injecting the second portion (MA, MA4).

8. Fluid-line connecting arrangement according to Claim 7, **characterized in that** the inlet portion (ME, ME4) and outlet portion (MA, MA4) of the middle part consist of different plastics.

## Revendications

1. Ensemble de raccordement de conduit pour fluide présentant :
- un raccordement d'entrée (EA) doté d'une direction principale d'entrée (HE) et destiné à raccorder de manière libérable un conduit d'amenée de fluide,
- un raccordement de sortie (AA) doté d'une direction principale de sortie (HA) et destiné à raccorder de manière libérable un conduit d'évacuation de fluide,
- un canal d'écoulement entre le raccordement d'entrée (EA) et le raccordement de sortie (AA),
- une articulation entre le raccordement d'entrée (EA) et le raccordement de sortie (AA), par laquelle le raccordement d'entrée (EA) et le raccordement de sortie (AA) peuvent pivoter l'un par rapport à l'autre dans différentes positions qui présentent différents angles entre la direction principale d'entrée (HE) et la direction principale de sortie (HA) autour d'au moins un axe d'articulation (GA) qui s'étend transversalement par rapport à la direction principale d'entrée (HE) et la direction principale de sortie (HA),
l'articulation contenant :
- une première partie d'articulation (ME) reliée au raccordement d'entrée (EA) et pivotant conjointement avec ce dernier,
- une deuxième partie d'articulation (MA) reliée au raccordement de sortie (AA) et pivotant conjointement avec ce dernier,
- une liaison articulée en forme de fourche,
**caractérisé en ce que**
un seul axe d'articulation (GA) est prévu entre la première partie d'articulation (ME) et la deuxième partie d'articulation (MA),
**en ce qu'**une section d'entrée (ME, ME4) et une section de sortie (MA, MA4) de la partie centrale (MT) servant de première et de deuxième partie d'articulation sont réalisées dans un procédé de moulage par injection en deux étapes,
**en ce que** l'une des sections (MA, MA4) est configurée en fourche et chevauche l'autre section (ME, ME4) dans la direction de l'unique axe d'articulation (GA) et
**en ce que** la section d'entrée (ME, ME4) et la section de sortie (MA, MA4) de la partie centrale (MT) s'engagent l'une dans l'autre dans la direction de l'axe d'articulation (GA).

2. Ensemble de raccordement de conduit pour fluide selon la revendication 1, **caractérisé en ce que** l'articulation peut pivoter dans des directions mutuellement opposées depuis une position centrale dans laquelle les deux directions principales (HE, HA) s'étendent en parallèle.

3. Ensemble de raccordement de conduit pour fluide selon les revendications 1 ou 2, **caractérisé en ce que** l'angle maximum de pivotement (SW) entre les deux directions principales (HE, HA) est d'au moins 30° et de préférence d'au moins \45°.

4. Ensemble de raccordement de conduit pour fluide selon l'une des revendications 1 à 3, **caractérisé en ce que** le raccordement d'entrée (EA) est conçu pour être relié à rotation solidaire à un conduit pour fluide.

5. Ensemble de raccordement de conduit pour fluide selon l'une des revendications 1 à 4, **caractérisé en ce que** le raccordement d'entrée (EA) est un raccordement fileté, un siège coulissant, un raccordement à baïonnette, une tubulure pour tuyaux flexibles ou une pièce d'un accouplement enfichable, de préférence rotatif.

6. Ensemble de raccordement de conduit pour fluide selon l'une des revendications 1 à 4, **caractérisé en ce que** le raccordement de sortie (AA) est un accordement fileté, un siège coulissant, un raccordement à baïonnette, une tubulure pour tuyaux flexibles ou une pièce d'un accouplement enfichable, de préférence rotatif.

7. Ensemble de raccordement de conduit pour fluide selon l'une des revendications 1 à 6, **caractérisé en ce que** la section d'entrée (ME, ME4) et la section de sortie (MA, MA4) peuvent être fabriquées en matière synthétique par un procédé de moulage par injection en deux étapes dans lequel la section (ME, ME4) injectée en premier lieu lors de la première étape forme avec une ou plusieurs parties de sa surface la frontière du moule utilisé pour l'opération d'injection de la deuxième section (MA, MA4).

8. Ensemble de raccordement de conduit pour fluide selon la revendication 7, **caractérisé en ce que** la partie d'entrée (ME, ME4) et la partie de sortie (MA, MA4) de la partie centrale sont réalisées en des matières synthétiques différentes.
